# EUROPÄISCHE PATENTSCHRIFT

(11) **EP 2 496 510 B1**
(45) Veröffentlichungstag und Bekanntmachung des Hinweises auf die Patenterteilung: **25.09.2013**
(21) Anmeldenummer: 10775803.9
(22) Anmeldetag: 03.11.2010
(51) Int. Cl.: B66C 19/00, B65G 63/00

(54) **UMSCHLAGSYSTEM FÜR ISO-CONTAINER MIT EINER CONTAINERBRÜCKE**
HANDLING SYSTEM FOR ISO CONTAINER HAVING A GANTRY CRANE
SYSTÈME DE TRANSBORDEMENT POUR CONTENEUR ISO COMPRENANT UN PONT DÉCHARGEUR POUR CONTENEURS

(30) Priorität: 06.11.2009 DE 102009053235
(43) Veröffentlichungstag der Anmeldung: 12.09.2012
(73) Patentinhaber: Gottwald Port Technology GmbH, 40597 Düsseldorf (DE)
(72) Erfinder: FRANZEN, Hermann, 41238 Mönchengladbach (DE); WIESCHEMANN, Armin, 46119 Oberhausen (DE); HEGEWALD, Mike, 46117 Oberhausen (DE); MOUTSOKAPAS, Jannis, 40789 Monheim (DE)
(74) Vertreter: Moser & Götze
(86) Internationale Anmeldenummer: PCT/EP2010/066724
(87) Internationale Veröffentlichungsnummer: WO 2011/054856

(56) Entgegenhaltungen:
- JP-A- 9 315 759
- US-A- 3 638 810
- US-A1- 2002 092 820

## Beschreibung

Die Erfindung betrifft ein Umschlagsystem für ISO-Container mit einer Containerkranbrücke und einem an die Containerkranbrücke angrenzenden Be- und Entladebereich, in den Transportfahrzeuge für ISO-Container ein- und ausfahrbar sind, in dem die Containerkranbrücke einen ersten Laufkran mit einem ersten Kranausleger, an dem eine erste Krankatze mit einem ersten Lastaufnahmemittel zwischen einem seeseitigen Abschnitt und einem landseitigen Abschnitt des ersten Kranauslegers verfahrbar ist, und einen zweiten Laufkran mit einem unterhalb des landseitigen Abschnitts des ersten Kranauslegers angeordneten zweiten Kranausleger aufweist, an dem eine zweite Krankatze mit einem zweiten Lastaufnahmemittel verfahrbar ist, wobei ISO-Container zwischen dem ersten Laufkran und dem zweiten Laufkran übergebbar sind.

Aus der deutschen Offenlegungsschrift DE 199 58 501 A1 ist eine Containerbrücke für den Umschlag von ISO-Containern zwischen Land und See bekannt. In üblicher Weise besteht die Containerbrücke aus einem Portalrahmen mit in den Ecken eines gedachten Vierecks angeordneten Stützen, von denen zwei seeseitig und die anderen beiden landseitig angeordnet sind. Der Portalrahmen ist über an den unteren Enden der Stützen angeordnete Fahrwerke entlang eines Kais auf Schienen verfahrbar. Von dem Portalrahmen wird ein erster Kranausleger getragen, der horizontal und quer zur Fahrrichtung der Containerbrücke entlang der Kais ausgerichtet ist. Der erste Kranausleger weist einen seeseitigen Abschnitt, der ein an dem Kai angrenzendes Hafenbecken und ein am Kai liegendes und zu be- oder entladendes Schiff überragt, und einen landseitigen Abschnitt auf, der den Kai im Bereich des Portalrahmens und einem angrenzenden Be- und Entladebereich überragt. An dem ersten Kranausleger ist eine erste Krankatze aufgehängt, die entlang des ersten Kranauslegers verfahrbar ist und an der ein erstes Lastaufnahmemittel für die ISO-Container heb- und senkbar aufgehängt ist. Des Weiteren ist eine zweite Krankatze an der Containerbrücke vorgesehen, die entlang eines zweiten Kranauslegers verfahrbar ist, der parallel zu dem ersten Kranausleger ausgerichtet und unterhalb der ersten Kranauslegers verläuft. Dieser Ausleger stützt sich am Anfang und am Ende im Bereich der land- und seeseitigen Stützen des Portalrahmens ab. Mittels der ersten Krankatze ist ein ISO-Container zwischen dem Schiff und dem Ein- und Auslagerungsbereich sowie zwischen dem Schiff und der zweiten Krankatze transportierbar. Hierfür ist die zweite Krankatze derart ausgebildet, dass der ISO-Container von oben in die zweite Krankatze einfahren kann und den ISO-Container auf das zweite Lastaufnahmemittel der zweiten Krankatze abstellen kann. Das zweite Lastaufnahmemittel ist nicht über Seile sondern über teleskopierbare Führungen an der zweiten Krankatze aufgehängt. Nachdem der ISO-Container auf dem zweiten Lastaufnahmemittel abgestellt worden ist, wird die zweite Krankatze entlang des zweiten Kranauslegers in Richtung eines auf dem Kai wartenden fahrerlosen Transportfahrzeuges verfahren und der ISO-Container wird von dem zweiten Lastaufnahmemittel auf eine Ladeplattform des Transportfahrzeuges abgestellt. Umgekehrt können auch Container von dem zweiten Lastaufnahmemittel von der Ladeplattform aufgenommen werden.

Aus der Offenlegungsschrift US 200210092820 A1 ist eine Containerkranbrücke gemäß dem Oberbegriff des Anspruchs 1 bekannt, mit einem ersten Laufkran und einem darunter angeordneten zweiten Laufkran. Zwischen dem ersten Laufkran und dem zweiten Laufkran können ISO-Container über einen Übergabeplatz übergeben werden. Auch können von dem ersten Laufkran und dem zweiten Laufkran ISO-Container an einen weiteren Zwischenlagerplatz abgegeben werden. Von diesem Zwischenlagerplatz können die ISO-Container über einen weiteren Portalkran an Transportfahrzeuge übergeben werden.

Aus der Patentschrift US 3 638 810 A ist ein Transportfahrzeug mit einem Hubelement zum Anheben und Absenken eines ISO-Containers bekannt.

Der vorliegenden Erfindung liegt die Aufgabe zu Grunde ein Umschlagsystem für ISO-Container mit einer Containerkranbrücke zu schaffen, das eine konstruktiv vereinfachte Bauweise bei gleichzeitig guter Umschlagleistung aufweist.

Diese Aufgabe wird durch ein Umschlagsystem mit den Merkmalen des Anspruchs 1 gelöst. Vorteilhafte Ausgestaltungen der Erfindung sind in den Unteransprüchen 2 bis 6 beschrieben.

Erfindungsgemäß wird bei einem Umschlagsystem für ISO-Container mit einer Containerkranbrücke und einem an die Containerkranbrücke angrenzenden Be- und Entladebereich, in den Transportfahrzeuge für ISO-Container ein- und ausfahrbar sind, in dem die Containerkranbrücke einen ersten Laufkran mit einem ersten Kranausleger, an dem eine erste Krankatze mit einem ersten Lastaufnahmemittel zwischen einem seeseitigen Abschnitt und einem landseitigen Abschnitt des ersten Kranauslegers verfahrbar ist, und einen zweiten Laufkran mit einem unterhalb des landseitigen Abschnitts des ersten Kranauslegers angeordneten zweiten Kranausleger aufweist, an dem eine zweite Krankatze mit einem zweiten Lastaufnahmemittel verfahrbar ist, wobei ISO-Container zwischen dem ersten Laufkran und dem zweiten Laufkran übergebbar sind, eine konstruktiv vereinfachte Bauweise bei gleichzeitig guter Umschlagleistung dadurch erreicht, dass an dem zweiten Kranausleger ein passiver Übergabeplatz für einen ISO-Container angeordnet ist und der ISO-Container zwischen dem Übergabeplatz und einem im Be- und Ladebereich ruhenden Transportfahrzeug übergebbar ist, der Übergabeplatz im Wesentlichen aus I-förmigen Tragarmen besteht, die an dem zweiten Kranausleger aufgehängt sind und im Bereich ihrer dem zweiten Kranausleger abgewandten Enden einen Auflagearm aufweisen, auf denen ein im Übergabeplatz abgestellter ISO-Container ruht und das Transportfahrzeug ein Hubelement aufweist, mit dem der ISO-Container von dem Übergabeplatz anhebbar oder auf den Übergabeplatz absenkbar ist. Im Sinne der Erfindung ist unter einem passiven Übergabeplatz ein Übergabeplatz zu verstehen, der nur aus einem an dem zweiten Kranausleger aufgehängten Traggestell für den ISO-Container besteht, wobei das Traggestell nicht in Vertikalrichtung aktiv bewegbar ist. Somit kann in den Übergabeplatz nur über das zweite Lastaufnahmemittel oder über ein mit einem Hubelement ausgestattetes Transportfahrzeug ein ISO-Container aus dem Übergabeplatz aufgenommen oder dort abgestellt werden. Der Übergabeplatz weist somit keine aufwendigen Antriebe auf. Aufgrund des Hubelements kann das Transportfahrzeug mit dem passiven Übergabeplatz zusammen arbeiten.

In konstruktiver Hinsicht einfach und vorteilhaft ist das Hubelement als Hubplattform ausgebildet, der Übergabeplatz von dem Transportfahrzeug mit einem abgesenkten und leerem Hubelement unterfahrbar beziehungsweise der ISO-Container in den Übergabeplatz von dem Transportfahrzeug mit einem angehobenen Hubelement einfahrbar und hierbei befindet sich der ISO-Container oberhalb der Auflagearme.

Vorteilhafter Weise ist vorgesehen, dass die Containerkranbrücke entlang von Schienen in Längsrichtung des Kais verfahrbar ist und der Übergabeplatz mit seiner Längserstreckung in Längsrichtung des Kais ausgerichtet ist.

Um den Umschlag der ISO-Container zu verbessern, weist der zweite Kranausleger einen dem seeseitigen Abschnitt des ersten Kranauslegers zugewandten portalseitigen Abschnitt und einen sich hieran anschließenden ladebereichseitigen Abschnitt auf. Der Übergabeplatz im ladebereichseitigen Abschnitt des zweiten Kranauslegers ist hierbei am zweiten Kranausleger befestigt. Die Transportfahrzeuge für die Bedienung der Übergabeplätze können somit außerhalb des Fahrbereichs der Containerkranbrücke und somit kreuzungsfrei auf dem Kai verfahren.

Um die Umschlagleistung zu erhöhen, sind in Längsrichtung des Kais gesehen mehrere Übergabeplätze nebeneinander am zweiten Kranausleger aufgehängt.

Für eine Entkoppelung der Förderbewegungen der beiden Laufkrane und somit für eine weitere Erhöhung der Umschlagleistung der Containerkranbrücke wird dadurch gesorgt, dass im Bereich des zweiten Laufkrans und unterhalb des zweiten Kranauslegers mindestens ein Zwischenlagerplatz für ISO-Container angeordnet ist, auf den von dem ersten Laufkran und dem zweiten Laufkran ISO-Container abstellbar oder von dort aufnehmbar sind.

Nachfolgend wird die Erfindung an Hand eines in einer Zeichnung dargestellten Ausführungsbeispiels näher beschreiben. Es zeigen:
Figur 1 eine Ansicht eines erfindungsgemäßen Umschlagsystems für ISO-Container mit einer Containerkranbrücke und einem an die Containerkranbrücke angrenzenden Be- und Entladebereich,
Figur 2 eine Ausschnittsvergrößerung von Figur 1 aus dem Bereich des Be- und Entladebereichs,
Figur 3 eine Seitenansicht von Figur 2,
Figur 4 eine Ausschnittsvergrößerung von Figur 1 aus dem Bereich eines Zwischenlagerplatzes und
Figur 5 eine Seitenansicht von Figur 4.

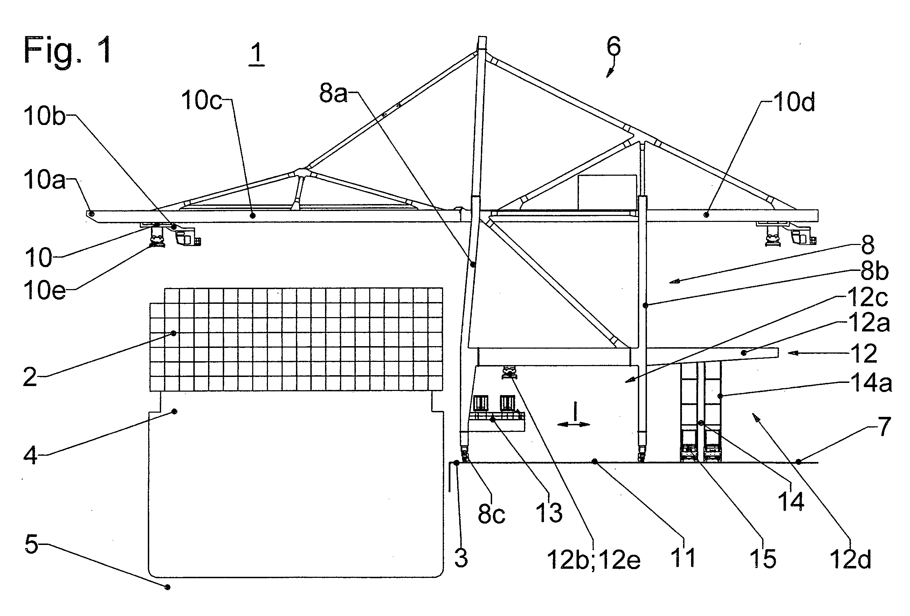

Die Figur 1 zeigt eine Ansicht eines erfindungsgemäßen Umschlagsystems 1 für ISO-Container 2, mit dem die ISO-Container zwischen einem Kai 3 und einem an dem Kai 3 anliegenden Schiff 4 transportiert werden können. In üblicher Weise befindet sich hierbei das Schiff 4 in einem Hafenbecken 5, das an den Kai 3 angrenzt. Das Umschlagsystem 1 besteht im Wesentlichen aus einer Containerkranbrücke 6 und einem im Bereich des Kais 3 an der Containerkranbrücke 6 angrenzenden Be- und Entladebereich 7.

Die Containerkranbrücke 6 weist in üblicher Weise einen Portalrahmen 8 mit zwei - in einer Längsrichtung des Kais 3 beziehungsweise in einer Fahrtrichtung der Containerkranbrücke 6 entlang des Kais 3 gesehen - voneinander beabstandeten seeseitigen Stützen 8a und ebenfalls entsprechend voneinander beabstandeten landseitigen Stützen 8b, die in den Eckpunkten eines gedachten Viereckes angeordnet sind. An den unteren Enden der see- und landseitigen Stützen 8a, 8b sind Fahrwerke 8c angeordnet, über die der Portalrahmen 8 und somit die gesamte Containerkranbrücke 6 auf auf dem Kai 3 angeordneten und nicht dargestellten Schienen in Längsrichtung des Kais 3 verfahrbar ist. Im Bereich der den Fahrwerken 8c abgewandten oberen Enden der see- und landseitigen Stützen 8a, 8b ist ein erster Kranausleger 10a eines erstes Laufkrans 10 befestigt, der im Wesentlichen horizontal ausgerichtet ist und rechtwinklig zur Längsrichtung des Kais 3 verläuft. Entlang des ersten Kranauslegers 10a ist eine erste Krankatze 10b verfahrbar. Der erste Kranausleger 10a kann begrifflich in einen seeseitigen Abschnitt 10c und einen landseitigen Abschnitt 10d geteilt werden. Der seeseitige Abschnitt 10c überspannt das Hafenbecken 5 und somit das an dem Kai 3 anliegende Schiff 4 mit der Ladung aus gestapelten ISO-Containern 2. Der landseitige Abschnitt 10d des ersten Kranauslegers 10a überspannt den Be- und Entladebereich 7 für die ISO-Container 2 sowie einen Fahrbereich 11 für den Portalrahmen 8 der Containerkranbrücke 6 auf dem Kai 3. In diesem Fahrbereich 11 sind auch die Schienen verlegt.

Die erste Krankatze 10b weist in üblicher Weise ein nicht dargestelltes Hubwerk auf, an dem über Hubseile ein erstes Lastaufnahmemittel 10e in Form eines Spreaders für die ISO-Container 2 aufgehängt ist. Mittels des ersten Lastaufnahmemittels 10e sind die ISO-Container 2 aufnehm- und absetzbar. Das erste Lastaufnahmemittel 10e kann somit einerseits die auf dem Schiff 3 gelagerten ISO-Container 2 erreichen und andererseits landseitig direkt ISO-Container 2 auf nicht dargestellte Transportfahrzeuge laden oder von diesen aufnehmen.

Zusätzlich zu dem ersten Laufkran 10 ist im Bereich des Portalrahmens 8 der Containerkranbrücke 6 und somit unterhalb des landseitigen Abschnitts 10d des ersten Kranauslegers 10a ein zweiter Laufkran 12 angeordnet. Dieser zweite Laufkran 12 besteht auch wiederum im Wesentlichen aus einem zweiten Kranausleger 12a, der rechtwinklig zur Längsrichtung des Kais 3 ausgerichtet ist sowie horizontal verläuft. Der zweite Kranausleger 12a stützt sich unterhalb des ersten Kranauslegers 10a an den see- und landseitigen Stützen 8a, 8b des Portalrahmens 8 ab und verläuft parallel zu diesem. An diesem zweiten Kranausleger 12a ist eine zweite Krankatze 12b in dessen Längsrichtung verfahrbar. Diese zweite Krankatze 12b weist wiederum ein nicht dargestelltes Hubwerk auf, an dem über Seile ein zweites Lastaufnahmemittel 12e in Form eines Spreaders zur Aufnahme und für das Absetzen der ISO-Container 2 heb- und senkbar aufgehängt ist. Der zweite Kranausleger 12a kann in einen portalseitigen Abschnitt 12c, der den Fahrbereich 11 des Portalrahmens 8 überspannt und sich zwischen den see- und landseitigen Stützen 8a, 8b erstreckt, und ein sich hieran anschließenden ladebereichseitigen Abschnitt 12d aufgeteilt werden, der den Be- und Entladebereich 7 überspannt. Im Bereich des portalseitigen Abschnittes 12c des zweiten Kranauslegers 12a sowie angrenzend an die seeseitigen Stützen 8b ist unterhalb des zweiten Kranauslegers 12a ein Zwischenlagerplatz 13 angeordnet. Dieser Zwischenlagerplatz 13 dient zur Zwischenlagerung von ISO-Containern 2 bei einer Übergabe dem ersten Laufkran 10 und dem zweiten Laufkran 12 oder umgekehrt. Dieser Zwischenlagerplatz 13 ist an den seeseitigen Stützen 8b angeordnet und oberhalb des Kais 3 sowie mit Abstand zu diesem.

Ein Löschvorgang des Schiffes 4 kann beispielsweise wie folgt ablaufen. Der erste Laufkran 10 nimmt mittels seines ersten Lastaufnahmemittels 10e einen 40-Fuß- oder zwei 20-Fuß-ISO-Container 2 von dem Schiff 4 auf, hebt dann diesen ISO-Container 2 über seine erste Krankatze 10b in Richtung des ersten Kranauslegers 10a an und verfährt anschließend entlang des ersten Kranauslegers 10a in Richtung des landseitigen Abschnittes 10d. Wenn die erste Krankatze 10b oberhalb des Zwischenlagerplatzes 13 angekommen ist, wird das erste Lastaufnahmemittel 10e abgesenkt und der ISO-Container 2 auf dem Zwischenlagerplatz 13 abgestellt. Im Bereich des Zwischenlagerplatzes 13 können dann auch an der Unterseite des ISO-Containers 2 in deren Ecken angeordnete Twist-Locks manuell entfernt werden. Anschließend nach Entriegelung des Lastaufnahmemittels 10e verlässt das erste Lastaufnahmemittel 10e den Zwischenlagerplatz 13 und wird in Richtung des Schiffes 4 verfahren, um den nächsten ISO-Container 2 zu löschen. Im Anschluss daran fährt die zweite Krankatze 12b mit ihrem zweiten Lastaufnahmemittel 12e über den nun auf dem Zwischenlagerplatz 13 ruhenden ISO-Container 2, senkt das zweite Lastaufnahmemittel 12e in Richtung dieses ISO-Containers 2 ab und verriegelt.das zweite Lastaufnahmemittel 12e mit dem ISO-Container 2. Anschließend wird der ISO-Container 2 mittels des zweiten Lastaufnahmemittels 12e aus dem Zwischenlagerplatz 13 angehoben und entlang des zweiten Kranauslegers 12a in Richtung des ladebereichseitigen Abschnittes 12d verfahren. In dem ladebereichseitigen Abschnitt 12d des zweiten Kranauslegers 12a sind in Längsrichtung I des zweiten Kranauslegers 12a gesehen hintereinander mehrere Übergabeplätze 14 angeordnet. Diese Übergabeplätze 14 bestehen im Wesentlichen aus vertikalen Tragarmen 14a, die insgesamt I-förmig ausgebildet sind und an ihrem dem zweiten Kranausleger 12a abgewandten unterem Ende horizontal ausgerichtete und nach innen weisende Auflagearme 14b aufweisen. Die vertikalen Tragarme 14a begrenzen somit seitlich den Übergabeplatz 14 und weisen in Längsrichtung des Kais 3 gesehen einen Abstand zueinander auf der geringfügig größer ist als die Breite der ISO-Container 2. In einem Übergabeplatz 14 sind somit eine Vielzahl von gegenüberliegenden und nach innen weisenden Auflagearmen 14b vorgesehen, um 20-Fuß-, 40-Fuß- und 45-Fuß-Container aufnehmen zu können. Von dem zweiten Lastaufnahmemittel 10e wird dann der ISO-Container 2 in den Übergabeplatz 14 abgesenkt und entlang der vertikal ausgerichteten starren Tragarme 14a nach unten in Richtung der Auflagearme 14b abgesenkt, solange bis der ISO-Container 2 auf den Auflagearmen 14b zum Ruhen kommt, die für die Länge des ISO-Containers 2 in Frage kommen. Anschließend wird das zweite Lastaufnahmemittel 12e entriegelt und nach oben aus dem Übergabeplatz 14 entlang der Tragarme 14a herausgefahren. Der Abstand zwischen den gegenüber liegenden Tragarmen 14a ist so gewählt, dass die ISO-Container 2 ausreichend Raum zu den seitlichen Tragarmen 14a beim Absenken und Anheben haben. Der Übergabeplatz 14 ist passiv ausgebildet, dass heißt im Sinne der Erfindung sind die Tragarme 14a und die Auflagearme 14b in Vertikalrichtung nicht heb- oder senkbar. Diese Übergabeplätze 14 dienen als weitere Zwischenlagerorte für die ISO-Container 2, damit diese unabhängig von der Förderbewegung des zweiten Laufkrans 12 anschließend von einem Transportfahrzeug 15 aufgenommen werden können.

Das Transportfahrzeug 15 ist vorzugsweise als fahrerloses Transportfahrzeug mit einem in Vertikalrichtung heb- und senkbaren Hubelement 15a in Form einer Hubplattform ausgebildet. Die Transportfahrzeuge 15 fahren in Längsrichtung des Kais 3 in den Be- und Entladebereich 7 ein. Dadurch dass die Transportfahrzeuge 15 fahrerlos sind, können diese automatisch sehr genau unter dem in den Übergabeplätzen 14 ruhenden ISO-Containern 2 positioniert werden. Dort kommen sie dann in einer Übergabestellung zum Ruhen. Anschließend wird das Hubelement 15a in Vertikalrichtung nach oben in Richtung der ISO-Container 2 angehoben. Das Hubelement 15a ist hierbei schmaler ausgebildet als die nach innen ragenden Auflagearme 14b und kann somit den ISO-Container 2 von den Auflagearmen 14b anheben. Anschließend verfährt das Transportfahrzeug mit angehobenem Hubelement 15a und hierauf ruhendem ISO-Container 2 in Längsrichtung L des Kais 3 aus dem Übergabeplatz 14 in die Richtung dessen Längserstreckung a hinaus. Hierbei bewegt das Transportfahrzeug 15 den ISO-Container 2 entlang der in Längsrichtung L des Kais 3 gesehen hintereinander angeordneten Tragarme 14a des Übergabeplatzes 14 und zwischen diesen hindurch. Nachdem das Transportfahrzeug 15 den Übergabeplatz 14 verlassen hat, wird das Hubelement 14a abgesenkt und das Transportfahrzeug 15 setzt seine Fahrt mit abgesenktem ISO-Container 2 fort.

Das Beladen eines Übergabeplatzes 14 mit einem ISO-Container 2 erfolgt entsprechender Weise in umgekehrter Reihenfolge. Demnach fährt ein Transportfahrzeug 15 einen Übergabeplatz 14 in Längsrichtung L des Kais 3 an. Kurz vor Erreichen des Übergabeplatzes 14 hält das Transportfahrzeug 15 an und das Hubelement 14a und somit der darauf ruhende ISO-Container 2 wird in Vertikalrichtung soweit angehoben, dass die Unterseite des ISO-Containers 2 oberhalb der Auflagearme 14b der Tragarme 14a gelangt. Anschließend fährt das automatisch geführte Transportfahrzeug 15 in den Übergabeplatz 14 hinein, wobei der ISO-Container 2 sich oberhalb der Auflagearme 14b befindet. Wenn das Transportfahrzeug 15 die Übergabestellung erreicht hat, hält dieses an und der ISO-Container 2 wird durch Absenken des Hubelementes 15a auf die Auflagearme 14b abgesetzt. Die Übergabeplätze 14 verändern gemeinsam mit der Containerkranbrücke 6 während des Entladens oder Beladens des Schiffes 4 entlang des Kais 3 ihre Stellung.

Da die Containerkranbrücke 6 während des Löschvorganges oder der Beladevorganges sich schrittweise entlang des Kais 3 bewegt, wandert auch der Be- und Entladebereich 7 entlang des Kais 3. Die auf dem Kai 3 verfahrbaren Transportfahrzeuge 15 können sich einfach an den verlagerten Be- und Entladebereich 7 anpassen.

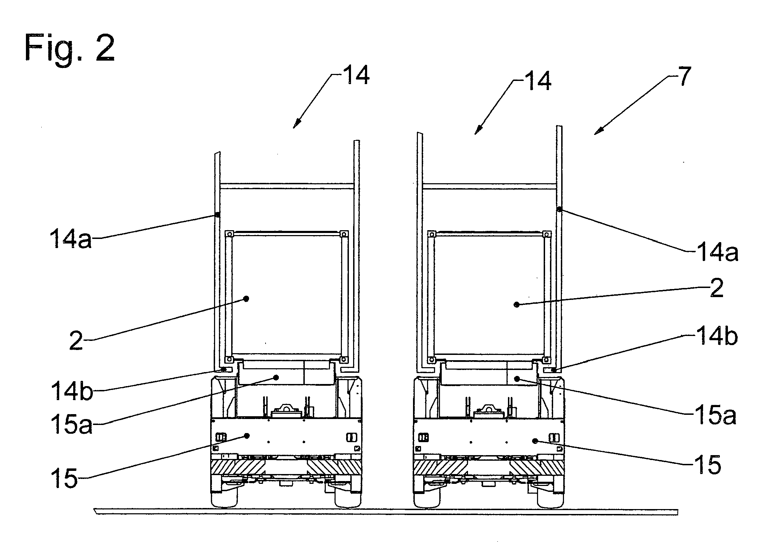

Die Figur 2 zeigt eine Ausschnittsvergrößerung von Figur 1 aus dem Bereich des Be- und Entladebereiches 7. Es sind zwei in Längsrichtung des Kais 3 gesehen nebeneinander angeordnete Übergabeplätze 14 zu erkennen, von denen der untere Abschnitt der in Vertikalrichtung ausgerichteten Tragarme 14a dargestellt ist, an deren unterem Ende sich die nach innen gerichteten Auflagearme 14b für eine Aufnahme der ISO-Container 2 anschließen. In die beiden Übergabeplätze 14 ist jeweils ein fahrerloses Transportfahrzeug 15 mit angehobenem Hubelement 15a eingefahren, so dass der ISO-Container 2 sich leicht mit seinen seitlichen und unteren Randbereichen oberhalb der Auflagearme 14b der Übergabeplätze 14 befindet. In dieser Stellung des Hubelementes 15a kann das Transportfahrzeug 15 gemeinsam mit einem ISO-Container 2 in Längsrichtung des Kais 3 gesehen durch die Übergabeplätze 14 hindurch fahren. Wenn das Transportfahrzeug 15 mit dem angehobenen Hubelement 15a und dem somit auch angehobenen ISO-Container 2 in der Übergabestellung angekommen ist, wird das Hubelement 15a abgesenkt, so dass in einem ersten Schritt der ISO-Container 2 mit seinen seitlichen Randbereichen auf den Auflagearmen 14b abgestellt wird und dann weiter in Richtung des Transportfahrzeuges 15 abgesenkt, so dass ausreichend Raum zwischen der Unterseite des ISO-Containers 2 bzw. den Auflagearmen 14b und dem Transportfahrzeug 15 bzw. dessen Hubelement 15a erreicht wird, so dass das Transportfahrzeug 15 unter dem Übergabeplatz 14 hinaus fahren kann, um weitere Transportaufgaben im Hafen zu übernehmen. Aus dieser abgestellten Stellung kann dann der ISO-Container 2 von dem zweiten Laufkran 12 weiter gehandhabt werden.

Grundsätzlich ist es auch möglich mehr als zwei oder nur einen Übergabeplatz 14 an dem zweiten Kranausleger 1a aufzuhängen.

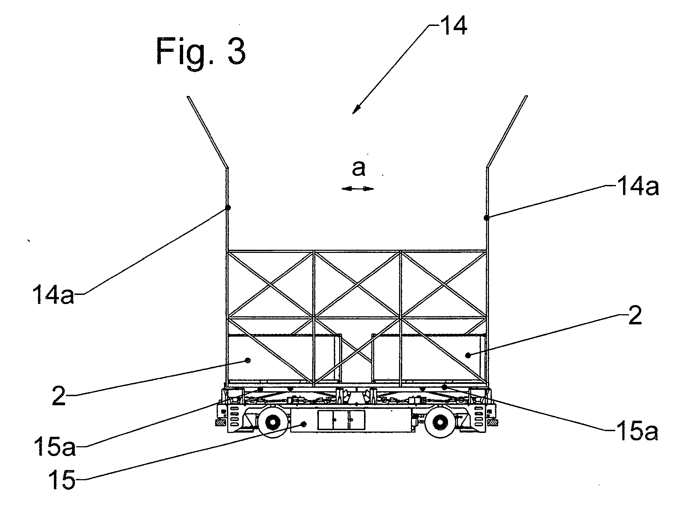

Die Figur 3 zeigt eine Seitenansicht von Figur 2, wobei sich auf dem Transportfahrzeug 15 in der angehobenen Stellung zwei ISO-Container 2 jeweils in einer 20-Fuß-Länge befinden. Es ist ersichtlich, dass die Tragarme 14a des Übergabeplatzes 14 fachwerkartig ausgesteift sind. Des Weiteren kann dieser Figur 3 entnommen werden, dass in Längsrichtung des Kais 3 gesehen die Länge des Übergabeplatzes 14 an die Länge der ISO-Container 2 angepasst ist. Gleiches gilt für die Transportfahrzeuge 15 mit ihren Hubelementen 15a. Das Transportfahrzeug 15 weist in dessen Fahrtrichtung gesehen zwei hintereinander angeordnete Hubelemente 15a auf, um somit ISO-Container 2 mit einer 20-Fuß-Länge unabhängig voneinander handhaben zu können. Für längere ISO-Container 2 mit einer 40-Fuß-Länge oder 45-Fuß-Länge werden die beiden Hubelemente 15a synchron angehoben oder abgesenkt.

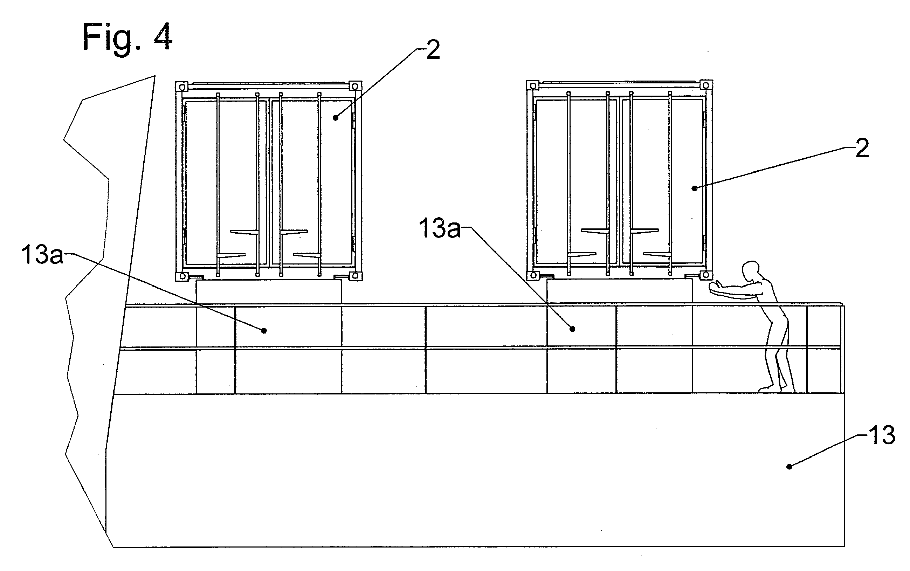

In der Figur 4 ist eine Ausschnittsvergrößerung von Figur 1 aus dem Bereich eines Zwischenlagerplatzes 13 dargestellt. Es ist ersichtlich, dass auf dem konsolenartig an den seeseitigen Stützen 8a des Portalrahmens 8 angeordnetem Zwischenlagerplatz 13 podestartige Auflageelemente 13a angeordnet, deren obere Auflagefläche so bemessen ist, dass diese wie die Hubelemente 15a der Transportfahrzeuge 15 schmaler als ein ISO-Container 2 sind, so dass ein hierauf abgestellter ISO-Container mit seinen seitlichen Randbereichen und Ecken nicht auf den Auflageelementen 13a aufliegt. Somit können von einem Arbeiter die Twistlocks für ein Stapeln der ISO-Container 2 an die unteren Ecken ISO-Container 2 angebracht oder entfernt werden.

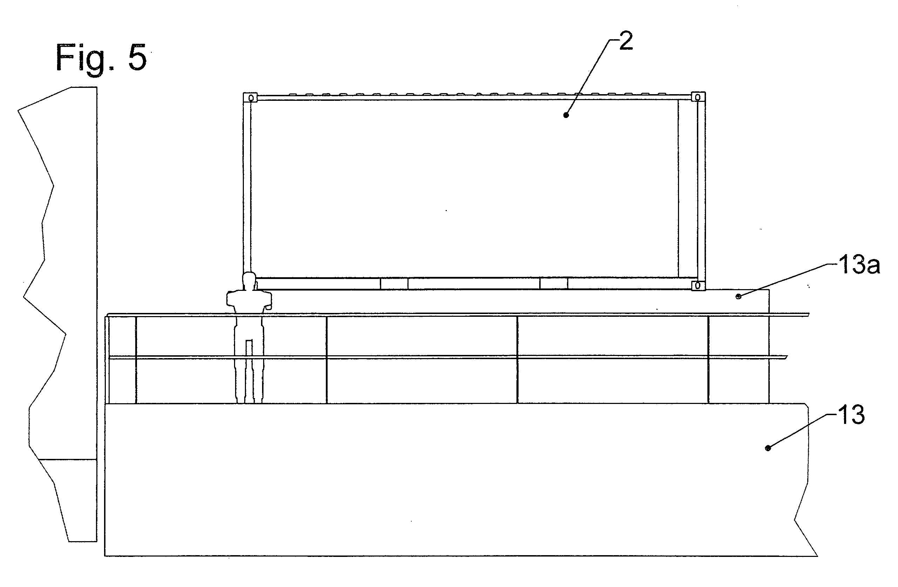

In der Figur 5 ist eine Seitenansicht von Figur 4 gezeigt. Dort ist nochmals das quaderförmige Auflageelement 13a zu erkennen, auf dem für die Zwischenlagerung ein ISO-Container 2 abgestellt ist.

### Bezugszeichenliste

- 1: Umschlagsystem
- 2: ISO-Container
- 3: Kai
- 4: Schiff
- 5: Hafenbecken
- 6: Containerkranbrücke
- 7: Be- und Entladebereich
- 8: Portalrahmen
- 8a: seeseitige Stütze
- 8b: landseitige Stütze
- 8c: Fahrwerke
- 10: erster Laufkran
- 10a: erster Kranausleger
- 10b: erste Krankatze
- 10c: seeseitiger Abschnitt
- 10d: landseitiger Abschnitt
- 10e: erstes Lastaufnahmemittel
- 11: Fahrbereich
- 12: zweiter Laufkran
- 12a: zweiter Kranausleger
- 12b: zweite Krankatze
- 12c: portalseitiger Abschnitt
- 12d: ladebereichseitiger Abschnitt
- 12e: zweites Lastaufnahmemittel
- 13: Zwischenlagerplatz
- 13a: Auflagerelemente
- 14: Übergabeplatz
- 14a: Tragarme
- 14b: Auflagearme
- 15: Transportfahrzeug
- 15a: Hubelement
- a: Längserstreckung des Übergabeplatzes 14
- I: Längsrichtung des zweiten Kranauslegers 12a

## Patentansprüche

1. Umschlagsystem für ISO-Container (2) mit einer Containerkranbrücke (6) und einem an die Containerkranbrücke (6) angrenzenden Be- und Entladebereich (7), in den Transportfahrzeuge (15) für ISO-Container (2) ein- und ausfahrbar sind, in dem die Containerkranbrücke (6) einen ersten Laufkran (10) mit einem ersten Kranausleger (10a), an dem eine erste Krankatze (10b) mit einem ersten Lastaufnahmemittel (10e) zwischen einem seeseitigen Abschnitt (10c) und einem landseitigen Abschnitt (10d) des ersten Kranauslegers (10a) verfahrbar ist, und einen zweiten Laufkran (12) mit einem unterhalb des landseitigen Abschnitts (10d) des ersten Kranauslegers (10a) angeordneten zweiten Kranausleger (12a) aufweist, an dem eine zweite Krankatze (12b) mit einem zweiten Lastaufnahmemittel (12e) verfahrbar ist, wobei ISO-Container (2) zwischen dem ersten Laufkran (10) und dem zweiten Laufkran (12) übergebbar sind, **dadurch gekennzeichnet, dass** an dem zweiten Kranausleger (12a) ein passiver Übergabeplatz (14) für einen ISO-Container (2) angeordnet ist und der ISO-Container (2) zwischen dem Übergabeplatz (14) und einem im Be- und Ladebereich (7) ruhenden Transportfahrzeug (15) übergebbar ist, der Übergabeplatz (14) im Wesentlichen aus I-förmigen Tragarmen (14a) besteht, die an dem zweiten Kranausleger (12a) aufgehängt sind und im Bereich ihrer dem zweiten Kranausleger (12a) abgewandten Enden einen Auflagearm (14b) aufweisen, auf denen ein im Übergabeplatz (14) abgestellter ISO-Container (2) ruht und das Transportfahrzeug (15) ein Hubelement (15a) aufweist, mit dem der ISO-Container (2) von dem Übergabeplatz (14) anhebbar oder auf den Übergabeplatz (14) absenkbar ist.

2. Umschlagsystem nach Anspruch 1, **dadurch gekennzeichnet, dass** das Hubelement (15a) als Hubplattform ausgebildet ist, der Übergabeplatz (14) von dem Transportfahrzeug (15) mit einem abgesenkten und leerem Hubelement (15a) unterfahrbar ist beziehungsweise der ISO-Container (2) in den Übergabeplatz (14) von dem Transportfahrzeug (15) mit einem angehobenen Hubelement (15a) einfahrbar ist und hierbei der ISO-Container (2) sich oberhalb der Auflagearme (14b) befindet.

3. Umschlagsystem nach Anspruch 1 oder 2, **dadurch gekennzeichnet, dass** die Containerkranbrücke (6) entlang von Schienen in Längsrichtung des Kais (3) verfahrbar ist und der Übergabeplatz (14) mit seiner Längserstreckung (a) in Längsrichtung des Kais (3) ausgerichtet ist.

4. Umschlagsystem nach einem der Ansprüche 1 bis 3, **dadurch gekennzeichnet, dass** der zweite Kranausleger (12a) einen dem seeseitigen Abschnitt (10c) des ersten Kranauslegers (10a) zugewandten portalseitigen Abschnitt (12c) und einen sich hieran anschließenden ladebereichseitigen Abschnitt (12d) aufweist und der Übergabeplatz (14) im ladebereichseitigen Abschnitt (12d) des zweiten Kranauslegers (12a) am zweiten Kranausleger (12a) befestigt ist.

5. Umschlagsystem nach einem der Ansprüche 1 bis 4, **dadurch gekennzeichnet, dass** in Längsrichtung des Kais (3) gesehen mehrere Übergabeplätze (14) nebeneinander am zweiten Kranausleger (12a) aufgehängt sind.

6. Umschlagsystem nach einem der Ansprüche 1 bis 5, **dadurch gekennzeichnet, dass** im Bereich des zweiten Laufkrans (12) und unterhalb des zweiten Kranauslegers (12a) mindestens ein Zwischenlagerplatz (13) für ISO-Container (2) angeordnet ist, auf den von dem ersten Laufkran (10) und dem zweiten Laufkran (12) ISO-Container (2) abstellbar oder von dort aufnehmbar sind.

## Claims

1. Handling system for ISO containers (2), having a container gantry crane (6) and a loading and unloading area (7), adjoining the container gantry crane (6), into which and from which vehicles (15) for transporting ISO containers (2) can be driven, in which handling system the container gantry crane (6) has a first overhead travelling crane (10) which has a first crane boom (10a) on which a first trolley (10b) having a first load picking-up means (10e) can be displaced between a sea portion (10c) of the first crane boom (10a) and a shore portion (10d) thereof, and the container gantry crane (6) has a second overhead travelling crane (12) which has a second crane boom (12a), arranged below the shore portion (10d) of the first crane boom (10a), on which a second trolley (12b) having a second load picking-up means (12e) can be displaced, ISO containers (2) being able to be transferred between the first overhead travelling crane (10) and the second overhead travelling crane (12), **characterised in that** a passive transfer station (14) for an ISO container (2) is arranged on the second crane boom (12a) and the ISO container (2) can be transferred between the transfer station (14) and a transporting vehicle (15) stationary in the loading and unloading area (7), **in that** the transfer station (14) comprises, in essence, I-shaped carrying arms (14a) which are suspended from the second crane boom (12a) and which each have, in the region of their ends remote from the second crane boom (12a), a supporting arm (14b) on which an ISO container (2) held in the transfer station (14) rests, and **in that** the transporting vehicle (15) has a lifting member (15a) by which the ISO container (2) can be lifted off the transfer station (14) or lowered onto the transfer station (14).

2. Handling system according to claim 1, **characterised in that** the lifting member (15a) takes the form of a lifting platform and the transporting vehicle (15), with a lowered and empty lifting member (15a), can be driven below the transfer station, (14), or the ISO container (2) can be driven into the transfer station (14) by the transporting vehicle (15), with a raised lifting member (15a), and the ISO container (2) is situated above the supporting arms (14b) when this is done.

3. Handling system according to claim 1 or 2, **characterised in that** the container gantry crane (6) can be displaced along rails in the longitudinal direction of the quay (3) and the longitudinal extent (a) of the transfer station (14) is aligned in the longitudinal direction of the quay (3).

4. Handling system according to one of claims 1 to 3, **characterised in that** the second crane boom (12a) has, adjacent the sea portion (10c) of the first crane boom (10a), a gantry portion (12a) and, following on from the latter, a loading-area portion (12d), and the transfer station (14) is fixed to the second crane boom (12a) in the loading-area portion (12d) of the second crane boom (12a).

5. Handling system according to one of claims 1 to 4, **characterised in that**, looking in the longitudinal direction of the quay (3), a plurality of transfer stations (14) are suspended from the second crane boom (12a) next to one another.

6. Handling system according to one of claims 1 to 5, **characterised in that** there is arranged in the region of the second overhead travelling crane (12) and below the second crane boom (12a) at least one intermediate storage station (13) for ISO containers (2) in which ISO containers (2) can be parked by the first overhead travelling crane (10) and the second overhead travelling crane (12) or from which they can be picked up thereby.

## Revendications

1. Système de transbordement de conteneurs ISO (2) comportant un pont de grue (6) et une zone de chargement et déchargement (7) qui est adjacente au pont de grue (6) et dans laquelle/de laquelle des véhicules (15) de transport de conteneurs ISO (2) peuvent entrer respectivement sortir et dans laquelle le pont de grue pour conteneurs (6) comporte un premier pont roulant (10) présentant une première flèche de grue (10a), au niveau de laquelle un premier chariot roulant (10b) doté d'un premier moyen de réception de charge (10e) est apte à se déplacer entre une section côté mer (10c) et une section côté terre (10d) de la première flèche de grue (10a), et un second pont roulant (12) présentant une seconde flèche de grue (12a) qui est disposée au-dessous de la section côté terre (10d) de la première flèche de grue (10a) et au niveau de laquelle un second chariot roulant (12b) doté d'un second moyen de réception de charge (12e) est apte à se déplacer, des conteneurs ISO (2) pouvant être transférés entre le premier pont roulant (10) et le second pont roulant (12), **caractérisé en ce qu'**un poste de transfert passif (14) destiné à un conteneur ISO (2) est disposé au niveau de la seconde flèche de grue (12a) et le conteneur ISO (2) peut être transféré entre le poste de transfert (14) et un véhicule de transport (15) stationné dans la zone de chargement et déchargement (7), le poste de transfert (14) étant essentiellement constitué de bras porteurs (14a) en forme de I qui sont suspendus à la seconde flèche de grue (12a) et qui comportent dans la région de leurs extrémités opposées à la seconde flèche de grue (12a) un bras de support (14b) sur lequel repose un conteneur ISO (2) placé dans le poste de transfert (14) et le véhicule de transport (15) comporte un élément de levage (15a) au moyen duquel le conteneur ISO (2) peut être soulevé du poste de transfert (14) ou abaissé sur le poste de transfert (14).

2. Système de transbordement selon la revendication 1, **caractérisé en ce que** l'élément de levage (15a) est conformé en plateforme de levage, le poste de transfert (14) doit présenter au-dessous un dégagement suffisant pour permettre le passage du véhicule de transport (15) doté d'un élément de levage (15a) vide et abaissé ou bien le conteneur ISO (2) peut être introduit dans le poste de transfert depuis le véhicule de transport (15) au moyen d'un élément de levage (15a) soulevé de manière à ce que le conteneur ISO (2) se trouve au-dessus des bras de support (14b).

3. Système de transbordement selon la revendication 1 ou 2, **caractérisé en ce que** le pont de grue pour conteneurs (6) est apte à se déplacer le long de rails dans la direction longitudinale du quai (3) et le poste de transfert (14) est orienté selon son extension longitudinale (a) dans la direction longitudinale du quai (3).

4. Système de transbordement selon l'une des revendications 1 à 3, **caractérisé en ce que** la seconde flèche de grue (12a) comporte une section côté portique (12c) dirigée vers la section côté mer (10c) de la première flèche de grue (10a) et une section côté zone de chargement (12d) adjacente à la précédente et le poste de transfert (14) est fixé à la seconde flèche de grue (12a) dans la section côté zone de chargement (12d) de la seconde flèche de grue (12a).

5. Système de transbordement selon l'une des revendications 1 à 4, **caractérisé en ce que**, lorsque l'on observe dans la direction longitudinale du quai (3), plusieurs postes de transfert (14) sont suspendus à la seconde flèche de grue (12a) l'un à l'autre.

6. Système de transbordement selon l'une des revendications 1 à 5, **caractérisé en ce que** dans la région du second pont roulant (12) et au-dessous de la seconde flèche de grue (12a) est disposé au moins un poste de stockage intermédiaire (13) qui est destiné à des conteneurs ISO (2) et où des conteneurs ISO (2) peuvent être posés ou retirés par le premier pont roulant (10) et second pont roulant (12).
